# EUROPEAN PATENT APPLICATION

(11) **EP 1 054 519 A1**
(43) Date of publication of application: **22.11.2000**
(21) Application number: 99440106.5
(22) Date of filing: 11.05.1999
(51) Int. Cl.: H04B 7/08, H04B 7/06

(54) **Diversity transmission in a mobile radio system**

(71) Applicant: ALCATEL, 75008 Paris (FR)
(72) Inventor: Tangemann, Michael, 71229 Leonberg (DE); Weinmann, Reinold, 73733 Esslingen (DE)
(74) Representative: Brose, Gerhard, Dipl.-Ing.

(57) **Abstract**

A mobile radio system (MTS) is disclosed which uses an improved diversity transmission method in which radio signals are transmitted from a base station (BS) to a mobile station (UE) over different radio paths (DL1, DL2) via two antennas separated by a given distance, and in which the mobile station (UE) checks whether the radio signals are received in phase, and sends a feedback signal (ULS) to the base station (BS) to enable the latter to correct the phase of the radio signal for at least one (DL1) of the radio paths (DL1, DL2). The feedback signal (ULS) contains bit patterns which change from time to time in order to indicate that the radio signals are not received in phase by the mobile station (UE). The bit patterns used are preferably different orthogonal pilot sequences which can be used for uplink channel estimation.

## Description

Mobile radio systems are known in which radio signals are transmitted by the diversity transmission method ("transmit diversity") to overcome the effects of fading. In conventional diversity transmission, radio signals are transmitted via two antennas separated by a given distance. As a result, the radio signals travel to the receiver by two different radio paths. If they are received there in phase, they can be constructively superposed. Diversity transmission is to be used in the new universal mobile radio system UMTS (Universal Mobile Telecommunications System).

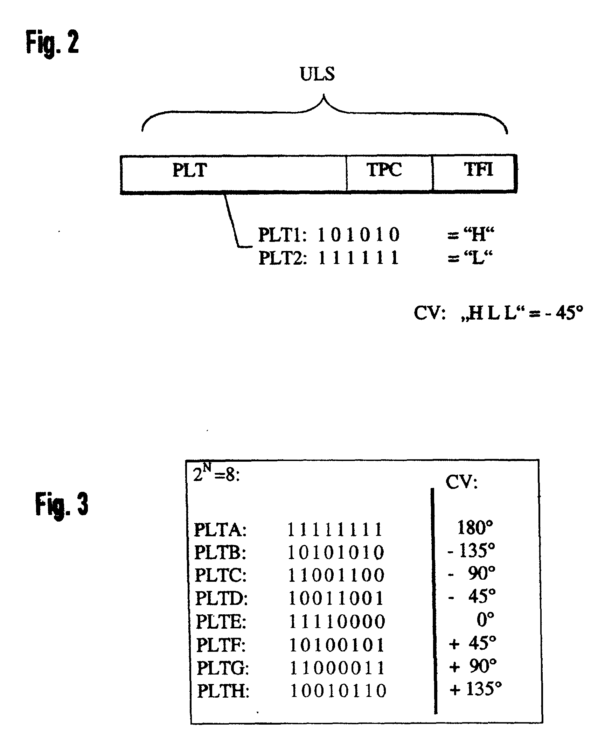

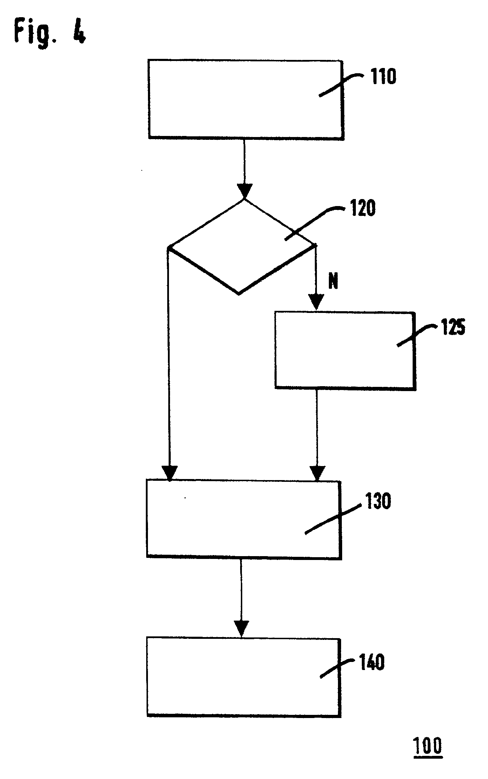

In the report on Meeting No. 9 of UMTS Standardization Group SMG2 of December 14-18, 1998, at Espoo, Finland (see document "Tdoc SMG2 UMTS-L1, 696/98", published by the European Telecommunications Standard Institute (ETSI), Nice, France), a base station is described which transmits CDMA radio signals (CDMA = code division multiple access) to a mobile station over two different radio paths via two antennas separated by a given distance. With reference to Fig. 3 of that report it is described that the antennas are fed different pilot sequences. In this manner, the two radio paths are marked at the transmitting end. Based on these marks, the mobile station at the receiving end can check whether the radio signals are received in phase. As is described in the report with reference to Fig. 4, the mobile station sends to the base station over an uplink channel a feedback signal FB which specifies the phase and amplitude settings to be used at the transmitting end in order for the radio signals to arrive at the receiving end in phase. By transmitting the feedback signal, the mobile station indicates that it wants a phase and amplitude correction to be performed by the base station. For the feedback signal, the so-called DPCCH (dedicated physical control channel) is used, which has a 10-bit data format. According to the proposals made for the UMTS standard so far, 6 bits of these 10 bits are reserved for a pilot sequence which is transmitted in the forward direction. 2 bits are reserved for the transmission of a transport format information (TFI) signal. The remaining 2 bits, according to the above document, are to be used to transmit a transmit power control (TPC) signal in the data field N_{TPC} and the feedback signal in the data field N_{FB}. Accordingly, a one-bit data field is provided for each of these two signals, i.e., a field in which only 1-bit values can be entered. With reference to Table 2, the report describes that the data field N_{FB} can be used over several frames in order to also transmit words with a length of 2 bits or 4 bits. This makes it possible to also transmit multidigit data values but reduces the refresh rate. As mentioned above, the data field N_{TPC} shown in Fig. 4 is only a one-bit field in which the transmit power control command TPC has to be entered. Since in UMTS the closed-loop power control should be particularly finely stepped and fast, it would be desirable if the data field N_{TPC} were an at least two-bit field. An extension of data fields within the predetermined 10-bit data format is not possible, however.

To overcome the above disadvantages, the invention proposes a diversity transmission method comprising the steps of transmitting a feedback signal which contains bit patterns changing from time to time if the radio signals are not received in phase, and receiving the feedback signal and evaluating the bit patterns in the base station to control the phase of the radio signal for at least one of the radio paths.

Accordingly, the wish for a phase correction is indicated by the change of bit patterns actually intended for another purpose, such as for channel estimation or synchronization. Such a transmitted bit pattern can be, for example, a so-called pilot sequence, which is actually intended for an estimation of the transfer function of the radio channel at the receiving end. Instead of continually transmitting the same pilot sequence, different pilot sequences are transmitted alternately if the mobile station does not receive the radio signals in phase. Thus, the transmission of the information with which the mobile station indicates its wish for a phase correction is effected by the occurrence of temporally changing bit patterns (sequences). If the mobile station constantly transmits the same bit pattern, the base station will detect no such wish. Entering feedback bits in a data field to be reserved for such bits is not necessary. The transmitted information is purely qualitative, namely information as to whether a phase correction is desired or not. Since, for the feedback, this information is characterized by the change of bit patterns and not by the contents of individual bit patterns, the bit patterns themselves can carry information for other purposes and be, for example, synchronization or pilot sequences. Since, in addition, no feedback bits have to be entered, no data field for such bits need be provided in the data format for the uplink channel. With respect to the data format used in UMTS, this means that no data field N_{FB} need be provided, and that the data field N_{TPC} can have a length of 2 bits.

Further advantageous features are defined in the subclaims.

Particularly advantageously, the mobile station transmits the bit patterns on a time slot-by-time slot basis using a first bit pattern and a second bit pattern which represent a binary 1 and a binary 0, respectively, and the base station evaluates the bit patterns received over several time slots and determines a multivalued correction value for correcting a phase difference between the radio signals which are not received in phase by the mobile station. In this manner, a correction with a resolution of more than 2 bits is achieved without having to transmit the multivalued correction value as a whole. The contents of the bit patterns do not specify the correction value; hence, the bit patterns can also be used for purposes other than the transmission of the correction value.

In this connection it is particularly advantageous if the feedback signal is transmitted over an uplink channel, and if the bit patterns comprise a set of two different pilot sequences suitable for estimating the transfer function of the uplink channel.

In a particularly simple embodiment, the mobile station transmits the bit patterns on a time slot-by-time slot basis using two different bit patterns, and the base station disconnects one of the two antennas for the duration of a reception of one of the bit patterns. This eliminates the need to determine a correction value and control a phase correction.

Furthermore, it is particularly advantageous if the mobile station transmits the bit patterns on a time slot-by-time slot basis using 2^{N} different bit patterns each specifying an N-valued correction value to correct a phase difference which exists between radio signals not received in phase by the mobile station, and if the base station changes the phase for at least one of the radio paths in accordance with the specified correction value. This permits a correction with a high resolution which is determined by the number of bit patterns used. If 2^{N} = 8 different bit patterns are used, this gives 3-valued correction values (3-bit words), which permit a correction of the phase with a spacing of 2π/8 = 45°.

The invention will become more apparent from the following description of two embodiments when taken in conjunction with the accompanying drawings, in which:
- Fig. 1: shows schematically the structure of a mobile radio system;
- Fig. 2: shows the data format for the uplink channel and the contents of the feedback signal transmitted in a first embodiment;
- Fig. 3: shows the contents of the feedback signal transmitted in a second embodiment; and
- Fig. 4: is a flowchart showing the steps of the method according to the invention.

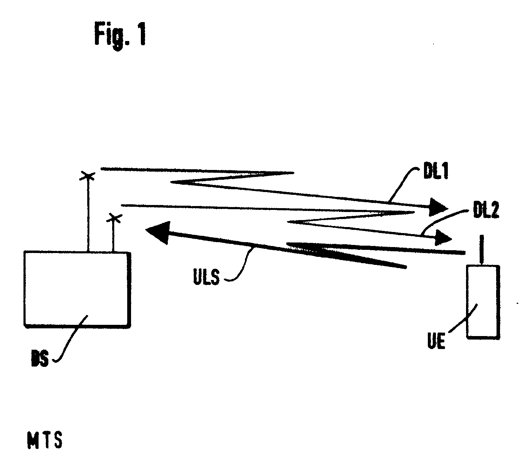

Fig. 1 shows a mobile radio system MTS with a base station BS and a mobile station UE communicating with the base station. The base station BS has two antennas for transmitting radio signals to the mobile station UE by the transmit diversity technique. The two antennas are separated by a distance equal to at least half of the wavelength of the radio signals to be transmitted. In this manner, two radio paths DL1 and DL2 are formed, over which the radio signals are transmitted to the mobile station UE. To be able to take advantage of the diversity technique, it must be possible to receive the radio signals at the mobile station UE in phase. Only in case of in-phase reception can the radio signals received on the different radio paths DL1 and DL2 be constructively superposed. To set the phase of the radio signals to be transmitted at the base station BS, the mobile station UE sends a feedback signal ULS which indicates to the base station BS whether the mobile station UE is receiving the radio signals in phase or not. To transmit this information, the feedback signal ULS contains different bit patterns changing from time to time. Preferably, the transmitted bit patterns are so-called pilot sequences, which can be evaluated by the base station BS to estimate the uplink channel.

Fig. 2 shows the data format of the feedback signal ULS, which consists of total of 10 bits. The feedback signal ULS contains a first data field PLT with a length of 6 bits, a second data field TPC with a length of 2 bits, and a third data field TFI with a length of 2 bits. The first data field PLT contains a pilot sequence which is evaluated by the base station to estimate the uplink channel. The second data field TPC contains a transmit power control command which indicates to the base station whether the transmitted power is to be raised or lowered. The third data field TFI serves to transmit formatting information. The radio transmission is performed on a time slot-by-time slot basis, taking this formatting information into account.

The following description is directed essentially to the first data field PLT, in which, according to the invention, at least two different bit patterns are entered alternately. Fig. 2 shows two mutually orthogonal pilot sequences PLT1 and PLT2, which are entered as bit patterns in the data field PLT and which are transmitted from the mobile station to the base station. If the base station determines that during transmission the different pilot sequences alternate, i.e., that changing bit patterns are transmitted, it concludes that the mobile station has not received the radio signals in phase. The phase of the radio signals to be transmitted should then be corrected at the base station.

This information is thus transmitted by the mere fact that different pilot sequences are used. The actual purpose of the pilot sequences, namely their use as reference patterns for channel estimation, is not affected. Accordingly, the information about the phase position at the receiver can be signaled to the base station without having to extend the structure of the data fields.

A phase correction is performed as follows. The pilot sequence PLT1 is assigned the binary value H, which corresponds to logic 1, and the pilot sequence PLT2 is assigned the binary value L, which corresponds to logic 0. The base station monitors the reception of the pilot sequences over several time slots to determine a sequence of binary values. If, for example, three time slots are monitored in which the pilot sequences were transmitted in the order "PLT1, PLT1, PLT2", this signifies the transmission of the binary values in the sequence "H, H, L". This sequence corresponds to a three-value word "110", which specifies a correction value CV. The correction value is here -45° and originates from a table containing a total of 2³ = 8 different correction values. Accordingly, a phase correction can be performed with a resolution of 3 bits, i.e., with a resolution of 360°/8 = 45°. Fig. 2 illustrates that the use of changing bit patterns makes it possible to transmit not only information as to whether the reception was in phase or not, but also additional information which indicates the amount by which the phase of the radio signals to be transmitted is to be corrected. The bit patterns themselves may serve other purposes, for example to estimate of the uplink channel.

Instead of performing a phase correction, it may suffice to indicate that a difference in phase exists at the receiver, whereupon the base station disconnects one of the two transmitting antennas for a certain period of time. The phase error can be indicated, for example, by repeated transmission of the second pilot sequence PLT2, whereupon the base station disconnects one of its antennas until this pilot sequence PLT2 is no longer transmitted.

Fig. 3 illustrates that it is not only possible to use changing bit patterns to transmit the information about the correction value, but that the bit patterns themselves can specify the desired correction value. To accomplish this, a set of 2^{N} mutually orthogonal pilot sequences is used. In Fig. 3, a data field length of 2^{N} = 8 is assumed, so that a total of eight orthogonal pilot sequences PLTA to PLTH can be formed. Each of the eight pilot sequences specifies a correction value CV. This permits a correction with a spacing of 45°. The mobile station detects a phase difference of 30°, for example. It then sends, instead of the pilot sequence PLTE, which indicates no wish for a correction, the pilot sequence PLTD to indicate a wish for a correction and notify the base station that the desired correction value CV is -45°. The base station will then change the phase of the radio signal transmitted over the radio path DL1 (see Fig. 1) by -45°. The radio signals transmitted over the two paths DL1 and DL2 will then arrive at the receiver (mobile station UE) nearly in phase.

Fig. 4 shows the flowchart for a diversity transmission method according to the invention, 100, comprising steps 110 to 140. In a first step 110, radio signals are transmitted from the base station to the mobile station over different radio paths via two antennas. In a next step 120, the mobile station checks whether these radio signals are received in phase. If that is the case, an ordinary feedback signal, which contains only one pilot sequence, will be sent to the base station.

If the radio signals were not received in phase, a different feedback signal will be sent. To do this, in the next step 125, a set of different pilot sequences is used which are alternately incorporated into the feedback signal. The feedback signal thus contains bit patterns changing from time to time. In a next step 130, the feedback signal is transmitted from the mobile station to the base station. In a further step 140, the base station receives this feedback signal and evaluates the received bit patterns to determine whether only one uniform pilot sequence was transmitted or whether different pilot sequences were transmitted. In this manner, the base station can determine whether the radio signals were received at the mobile station in phase or not.

As was described with reference to the embodiments of Figs. 2 and 3, the phase correction is controlled by the transmission of different pilot sequences in successive time slots. If only two different pilot sequences are used, one control bit can be transmitted with each time-slot change. With a single control bit, only a phase correction by 360°/2 = 180° could be performed. To be able to perform a more accurate correction, the following measures are proposed:
(a) Use of a greater number of different pilot sequences, e.g., 2^{N} = 8 different pilot sequences, as is illustrated in Fig. 2. This corresponds to a transmission of N = 3 control bits.
(b) Monitoring of several time slots to recognize an order in which the pilot sequences are transmitted. For example, the two pilot sequences shown in Fig. 2 are transmitted in the order "PLT1, PLT1, PLT2", which is then recognized at the receiving end. This, too, corresponds to a transmission of three control bits.

With N control bits, 2^{N} phase positions can be described. Accordingly, the correction can be performed with a resolution of N bits, i.e., in steps of 360°/N (in this example, 360°/8 = 45°).

The greater the number of pilot sequences used or the greater the number of time slots monitored, the more accurate the phase correction will be. The two above-mentioned measures can also be combined.

The diversity transmission method described and the mobile radio system for carrying out the method are particularly suited for the transmission of CDMA radio signals. In CDMA systems, an uplink channel is already reserved for transmission of a feedback signal which is used for closed-loop power control.

## Claims

1. A diversity transmission method (100) for a mobile radio system (MTS), comprising the steps of: transmitting radio signals from a base station (BS) to a mobile station (UE) over different radio paths (DL1, DL2) via two antennas separated by a given distance (110); checking in the mobile station (UE) whether the radio signals are received in phase (120); transmitting (130) a feedback signal (ULS) which contains bit patterns (PLT1, PLT2) changing from time to time if the radio signals are not received in phase (125); and receiving the feedback signal (ULS) and evaluating the bit patterns (PLT1, PLT2) in the base station (BS) to control the phase of the radio signal to be transmitted for at least one (DL1) of the radio paths (DL1, DL2) (140).

2. A method (100) as claimed in claim 1, comprising the steps of: transmitting the bit patterns (PLT1, PLT2) from the mobile station (UE) on a time slot-by-time slot basis using two different bit patterns (PLT1, PLT2) representative of the two binary values (H, L); and evaluating the bit patterns (PLT1, PLT2) received over several time slots and determining a multivalued correction value (CW) for correcting a phase difference which exists between the radio signals not received in phase by the mobile station (UE).

3. A method as claimed in claim 1, comprising the steps of: changing from the transmission of a first bit pattern (PLT1) to the transmission of a second bit pattern (PLT2) as soon as a phase difference exists between the radio signals received by the mobile station (UE); and causing the base station (BS) to disconnect one of the two antennas for the duration of a reception of the second bit pattern (PLT2).

4. A method as claimed in claim 1, comprising the steps of: transmitting the bit patterns from the mobile station (UE) on a time slot-by-time slot basis using 2^{N} (N = natural number) different bit patterns (PLTA to PLTH) each specifying an N-valued correction value (CW) to correct a phase difference which exists between the radio signals not received in phase by the mobile station (UE); and changing the phase for one (DL1) of the radio paths (DL1, DL2) in the base station (BS) in accordance with the specified correction value (CW).

5. A method as claimed in claim 1, comprising the steps of: transmitting the feedback signal (ULS) over an uplink channel; and implementing the bit patterns as a set of at least two different pilot sequences (PLT1, PLT2; PLTA to PLTH) which are each suited for estimating the transfer function of the uplink channel.

6. A mobile radio system (MTS) comprising a base station (BS) which transmits radio signals to a mobile station (UE) over different radio paths (DL1, DL2) via two antennas separated by a given distance, wherein the mobile station (UE) checks whether it receives the radio signals in phase, and transmits a feedback signal (ULS) which contains bit patterns (PLT1, PLT2) changing from time to time if the mobile station (UE) does not receive the radio signals in phase, and wherein the base station (BS) receives the feedback signal (ULS) and evaluates the bit patterns (PLT1, PLT2) to control the phase of the radio signal for at least one (DL1) of the radio paths (DL1, DL2).

7. A base station (BS) for a mobile radio system (MTS) which transmits radio signals to a mobile station (UE) over different radio paths (DL1, DL2) via two antennas separated by a given distance, and receives a feedback signal (ULS) which contains bit patterns (PLT1, PLT2) changing from time to time if the mobile station (UE) does not receive the radio signals in phase, said base station (BS) evaluating the bit patterns (PLT1, PLT2) to control the phase of the radio signal for at least one (DL1) of the radio paths (DL1, DL2).

8. A mobile station (UE) for a mobile radio system (MTS) which receives radio signals transmitted from a base station (BS) to the mobile station (UE) over different radio paths (DL1, DL2) via two antennas separated by a given distance, and which checks whether it receives the radio signals in phase, and sends to the base station (BS) a feedback signal (ULS) which contains bit patterns (PLT1, PLT2) changing from time to time if the mobile station (UE) does not receive the radio signals in phase, so that the base station (BS) receives the feedback signal (ULS) and evaluates the bit patterns (PLT1, PLT2) to control the phase of the radio signal for at least one (DL1) of the radio paths (DL1, DL2).
